# EUROPÄISCHE PATENTANMELDUNG

(11) **EP 0 921 347 A1**
(43) Veröffentlichungstag der Anmeldung: **09.06.1999**
(21) Anmeldenummer: 98121493.5
(22) Anmeldetag: 12.11.1998
(51) Int. Cl.: F21V 8/00

(54) **Anzeigetafel für Werbezwecke**

(30) Priorität: 03.12.1997 DE 19753626
(71) Anmelder: "Der Grüne Punkt" Duales System Deutschland Aktiengesellschaft, 51445 Köln (DE); Koch, Claus, 40221 Düsseldorf (DE); Dambach-Werke GmbH, D-76571 Gaggenau (DE)
(72) Erfinder: Koch, Claus, 40221 Düsseldorf (DE)
(74) Vertreter: Tönhardt, Marion, Dr.

(57) **Zusammenfassung**

Eine Anzeigetafel für Werbezwecke oder dergleichen, bei der sich ein Werbeträger, wie ein Plakat, auswechselbar hinter einem Schaufeld (36) befindet, ist gekennzeichnet durch
- einen Schaufeldraum (20), der durch eine schwenkbare Tür (30) verschließbar ist, wobei das Schaufeld (36) in der Tür (30) vorgesehen ist; und
- mindestens einen Leuchtmittelraum (10), der angrenzend an den Schaufeldraum (20) angeordnet ist,
wobei der Leuchtmittelraum (10) und der Schaufeldraum (20) eine gemeinsame lichtdurchlässige Wand (15) aufweisen.

## Beschreibung

Die vorliegende Erfindung betrifft eine Anzeigetafel für Werbezwecke oder dergleichen, bei der sich ein Werbeträger, wie ein Plakat, auswechselbar hinter einem Schaufeld befindet.

Derartige Anzeigetafeln sind bekannt und werden beispielsweise an Haltestellen für öffentliche Verkehrsmittel eingesetzt.

Es ist die Aufgabe der Erfindung, eine Anzeigetafel zur Verfügung zu stellen, bei der der Werbeträger auch bei Dunkelheit gut zu erkennen ist.

Diese Aufgabe wird durch eine Anzeigetafel nach Anspruch 1 gelöst. Vorteilhafte Ausgestaltungen sind Gegenstand der Unteransprüche.

Erfindungsgemäß weist die Anzeigetafel einen Schaufeldraum, der durch eine schwenkbare Tür verschließbar ist, wobei das Schaufeld in der Tür vorgesehen ist, und mindestens einen Leuchtmittelraum, der angrenzend an den Schaufeldraum angeordnet ist, auf, wobei der Leuchtmittelraum und der Schaufeldraum eine gemeinsame lichtdurchlässige Wand aufweisen. Der Werbeträger wird dabei in dem Schaufeldraum angeordnet und durch die lichtdurchlässige Wand ausgeleuchtet. Dabei kann der Werbeträger direkt an der der Tür gegenüberliegenden Rückwand des Schaufeldraumes angebracht werden.

Soll der Werbeträger hinterleuchtet werden, ist vorteilhaft, im Schaufeldraum beabstandet von der der Tür gegenüberliegenden Rückwand ein Rahmen für den Werbeträger vorgesehen, und es sind zwischen Rückwand und Rahmen Leuchtmittel angeordnet. Diese Leuchtmittel können beispielsweise Leuchtstoffröhren sein und sorgen dann, bei geeigneter Gestaltung des Werbeträgers, für den gewünschten Effekt.

Um die Aufmerksamkeit besonders auf die Anzeigetafel zu lenken, kann an einer betrachterseitigen Wand des Leuchtmittelraumes ein lichttransparentes Muster vorgesehen sein.

Besonders vorteilhaft sind der mindestens eine Leuchtmittelraum und der Schaufeldraum einer kreisbogenförmigen Kontur folgend angeordnet. Dadurch eignet sich die Anzeigetafel besonders zum Anbringen an Containern oder Litfaßsäulen.

Im folgenden soll die Erfindung anhand der beigefügten Zeichnung näher erläutert werden. Dabei zeigt
- Figur 1: eine Draufsicht auf eine erste Ausführungsform einer Anzeigetafel gemäß der vorliegenden Erfindung;
- Figur 2: eine teilperspektivische Ansicht einer zweiten Ausführungsform der Anzeigetafel gemäß der Erfindung.

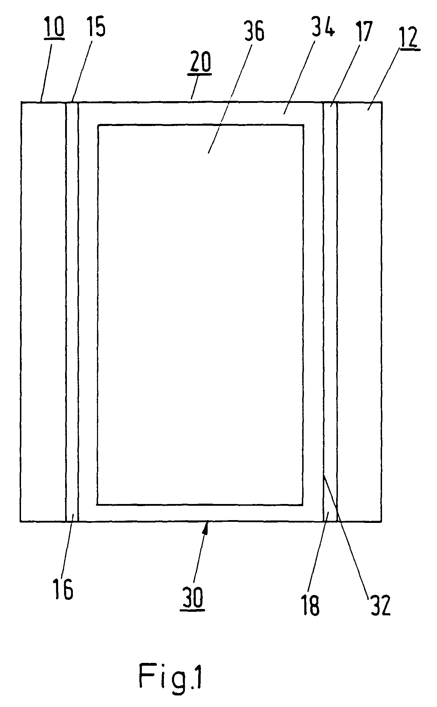

Die Anzeigetafel der Figur 1 besteht aus einem Schaufeldraum 20, der im allgemeinen quaderförmig oder gebogen-quaderförmig (einem Kreisbogen folgend) ausgebildet ist, wobei an jeder Längsseite ein Leuchtmittelraum 10 bzw. 12 angeordnet ist. Leuchtmittelraum 10 und Schaufeldraum 20 weisen eine gemeinsame Wand 15 aus einem lichttransparenten Material auf. Gleichermaßen weisen der Schaufeldraum 20 und der Leuchtmittelraum 12 eine gemeinsame Wand 17 auf, die ebenfalls lichttransparent ist. Somit kann durch geeignete Leuchtmittel in den Leuchtmittelräumen 10, 12 erzeugtes Licht durch die Wände 15, 17 in den Schaufeldraum 20 treten. Betrachterseitig ist der Schaufeldraum 20 durch eine Tür 30 verschlossen, die aus einem Rahmen 34 besteht, der mittels zweier Scharniere 32 oder dergleichen schwenkbar angelenkt ist. Der Rahmen 34 umschließt ein transparentes Schaufeld 36. Die Tür ist mittels eines Magnetschnäppers und/oder eines Schlosses auf übliche Weise verschließbar. Ein Werbeträger, nicht dargestellt, kann in dem Schaufeldraum 20 angeordnet werden. Die dem Betrachter zugewandten Wände des Schaufeldraumes 20 sind zu den entsprechenden Wänden der Leuchtmittelräume 10, 12 versetzt, so daß Nuten 16, 18 gebildet werden. Dabei sind in der Nut 18 die Scharniere 32 versenkt.

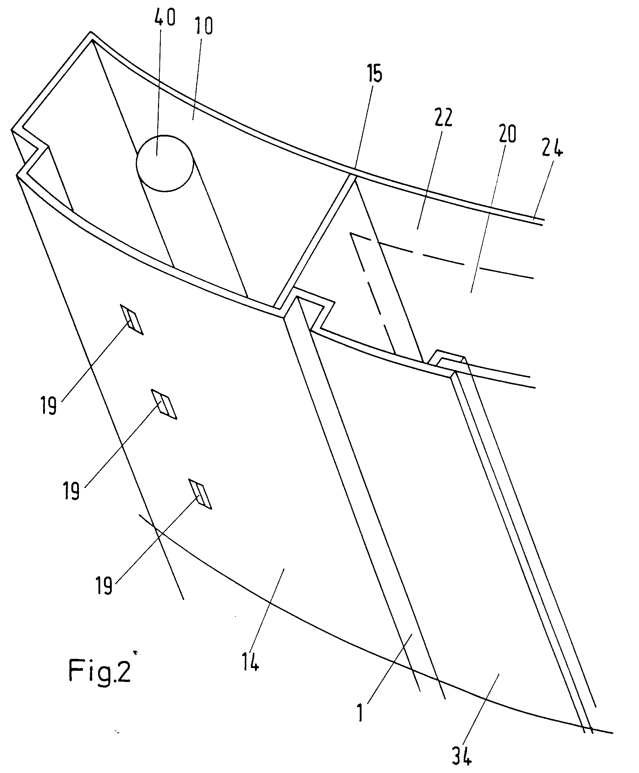

Die teilperspektivische Ansicht der Figur 2 zeigt einen Leuchtmittelraum 10, in dem ein Leuchtmittel 40 in Form einer Leuchtstange oder Leuchtstoffröhre untergebracht ist. Das Licht des Leuchtmittels 40 tritt nicht nur durch die Wand 15, sondern auch durch ein Perforationsmuster 19, das an der betrachterseitigen Wand 14 des Leuchtmittelraumes 10 angeordnet ist. Im Schaufeldraum 20 ist beabstandet von der Rückwand 24 ein Rahmen 22 vorgesehen, auf den der Werbeträger, beispielsweise ein Plakat, geklebt werden kann. Zwischen Rahmen 22 und Rückwand 24 können weitere Leuchtmittel (nicht dargestellt) vorgesehen sein, um den Werbeträger zu hinterleuchten. Der Werbeträger kann auch unmittelbar an der Rückwand 24 befestigt werden und wird dann von den Seitenwänden her - in Figur 2 ist nur die Seitenwand 15 dargestellt - beleuchtet. Das Schaufeld 36 besteht aus einer transparenten Kunststoffscheibe, beispielsweise aus Polycarbonat, und ist in dem Rahmen 34 in einer Nut gefaßt. Die Ausführungsform der Figur 2 deutet den kreisbogenförmigen Verlauf der Anordnung der Leuchtmittelräume und des Schaufeldraumes an.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### BEZUGSZEICHENLISTE

- 10: Leuchtmittelraum
- 12: Leuchtmittelraum
- 14: betrachterseitige Wand
- 15: lichtdurchlässige Wand
- 16: Nut
- 17: lichtdurchlässige Wand
- 18: Nut
- 19: lichttransparentes Muster
- 20: Schaufeldraum
- 22: Rahmen
- 24: Rückwand
- 30: Tür
- 32: Scharniere
- 34: Rahmen
- 36: Schaufeld, transparente Scheibe

## Patentansprüche

1. Anzeigetafel für Werbezwecke oder dergleichen, bei der sich ein Werbeträger, wie ein Plakat, auswechselbar hinter einem Schaufeld (36) befindet,
gekennzeichnet durch
- einen Schaufeldraum (20), der durch eine schwenkbare Tür verschließbar ist, wobei das Schaufeld (36) in der Tür (30) vorgesehen ist; und
- mindestens einen Leuchtmittelraum (10; 12), der angrenzend an den Schaufeldraum (20) angeordnet ist,
wobei der Leuchtmittelraum (10) und der Schaufeldraum (20) eine gemeinsame lichtdurchlässige Wand (15) aufweisen.

2. Anzeigetafel nach Anspruch 1, dadurch gekennzeichnet, daß im Schaufeldraum (20) beabstandet von der der Tür (30) gegenüberliegenden Rückwand (24) ein Rahmen (22) für den Werbeträger vorgesehen ist und daß zwischen Rückwand (24) und Rahmen (22) Leuchtmittel angeordnet sind.

3. Anzeigetafel nach Anspruch 1 oder 2, dadurch gekennzeichnet, daß an einer betrachterseitigen Wand (14) des Leuchtmittelraumes (10) ein lichttransparentes Muster (19) vorgesehen ist.

4. Anzeigetafel nach einem der Ansprüche 1 bis 3, dadurch gekennzeichnet, daß der mindestens eine Leuchtmittelraum (10, 12) und der Schaufeldraum (20) einer kreisbogenförmigen Kontur folgend angeordnet sind.
